# EUROPÄISCHE PATENTANMELDUNG

(11) **EP 2 011 715 A2**
(43) Veröffentlichungstag der Anmeldung: **07.01.2009**
(21) Anmeldenummer: 08011143.8
(22) Anmeldetag: 19.06.2008
(51) Int. Cl.: B62B 3/14

(54) **Klappe für Transportwagen**

(30) Priorität: 25.06.2007 DE 102007029499
(71) Anmelder: Wanzl Metallwarenfabrik GmbH, 89336 Leipheim (DE)
(72) Erfinder: Blaha, Martin, 89335 Ichenhausen (DE)

(57) **Zusammenfassung**

Die Erfindung betrifft Transportwagen mit Rollen, einem Korb, einer Schiebegriffeinheit und einem Gestell, sowie einer am Korb beweglich rückwärtig angeordneten Klappe (1), wobei die Klappe (1) aus Kunststoff gefertigt ist und wobei die Klappe (1) um eine horizontale Achse verschwenkbar am Gestell angeordnet ist, wofür die Klappe (1) an ihren beiden oberen Enden (2) jeweils eine Halterung (3) aufweist, die in Form einer Bohrung (5) gestaltet ist.

Die Erfindung zeichnet sich dadurch aus, dass jede Halterung (3) für die Aufnahme einer Mutter eine Öffnung (4) aufweist, und dass die Bohrung (5) als Führung der Schraube vorgesehen ist, die in die Öffnung (4) mündet.

## Beschreibung

Die Erfindung betrifft eine Klappe für einen Transportwagen mit den Merkmalen im Oberbegriff des Hauptanspruchs.

In der europäischen Patentschrift EP 1 451 053 B1 beispielsweise, ist ein Transportwagen mit einer solchen Klappe beschrieben. Der Wagen weist neben einem Kunststoffkorb auch einen Schiebegriff und eine Klappe aus Kunststoff auf. Hierbei ist die Klappe an ihren Enden derart ausgebildet, dass sie beweglich am Gestell gelagert ist.

Hierfür ist an der schmalen Seite am oberen Ende der Klappe eine Bohrung vorgesehen. Eine Schraube wird durch eine Öffnung im Gestell und dem Schiebegriff geführt und endet in der Bohrung der Klappe.

Der Durchmesser der Bohrung ist kleiner als der Durchmesser des Außengewindes der Schraube. Die Schraube wird mit einem Klebstoff versehen, durch die Öffnungen von Gestell und Schiebegriff geführt und schließlich in die Bohrung gedreht. Hierbei wird eine Metallschraube verwendet, die direkt in die aus Kunststoff gefertigte Bohrung der Klappe geschraubt wird. Das Außengewinde der Schraube dreht sich in den Kunststoff ein.

Der Nachteil besteht jedoch darin, dass die Schraube nicht dauerhaft in dieser Position bleibt. Die Wirkung des Klebstoffs lässt nach, was schließlich zur Folge haben kann, dass sich die Schraube löst. Somit ist eine sichere Verbindung von Gestell, Schiebegriff und Klappe nicht mehr gegeben.

Die Aufgabe der Erfindung besteht deshalb darin, eine verbesserte Klappe aufzuzeigen.

Die Erfindung löst die Aufgabe mit den Merkmalen im Hauptanspruch.

Die eingesetzte Schraube greift nicht mehr in die Wandung der Bohrung bzw. einer Führung. Die Schraube wird somit nicht mehr im Kunststoff verschraubt. Vielmehr greift das Außengewinde der Schraube in das Innengewinde der Mutter. Dadurch ist die Schraube dauerhaft in der Halterung angeordnet. Ein selbstständiges Lösen ist somit unterbunden.

Weiterhin ist der Einsatz eines Klebstoffs nicht mehr notwendig.

Die Erfindung wird anhand eines Ausführungsbeispiels näher erläutert. Es zeigt
- Fig. 1: den Ausschnitt einer Klappe in Seitenansicht;
- Fig. 2: den gleiche Ausschnitt einer Klappe in Draufsicht sowie
- Fig. 3: den gleichen Ausschnitt einer Klappe in 3-D-Ansicht.

Die Erfindung betrifft einen von Hand beweglichen Transportwagen mit Rollen, einem Korb, einer Schiebegriffeinheit und einem Gestell. Am Korb ist beweglich rückwärtig eine Klappe 1 angeordnet. Die Klappe 1 ist, wie der Korb auch, aus Kunststoff gefertigt. Sie kann einen Kindersitz aufweisen. Die Klappe 1 ist in bekannter Weise um eine horizontale Achse verschwenkbar am Gestell angeordnet. Die Klappe 1 weist an ihren beiden oberen Enden 2 jeweils eine Halterung 3 auf. Diese ist in Form einer horizontalen Bohrung 5 für die Aufnahme einer Schraube gestaltet.

Die Schraube verbindet jeweils das Gestell des Transportwagens und den Schiebegriff mit der Klappe.

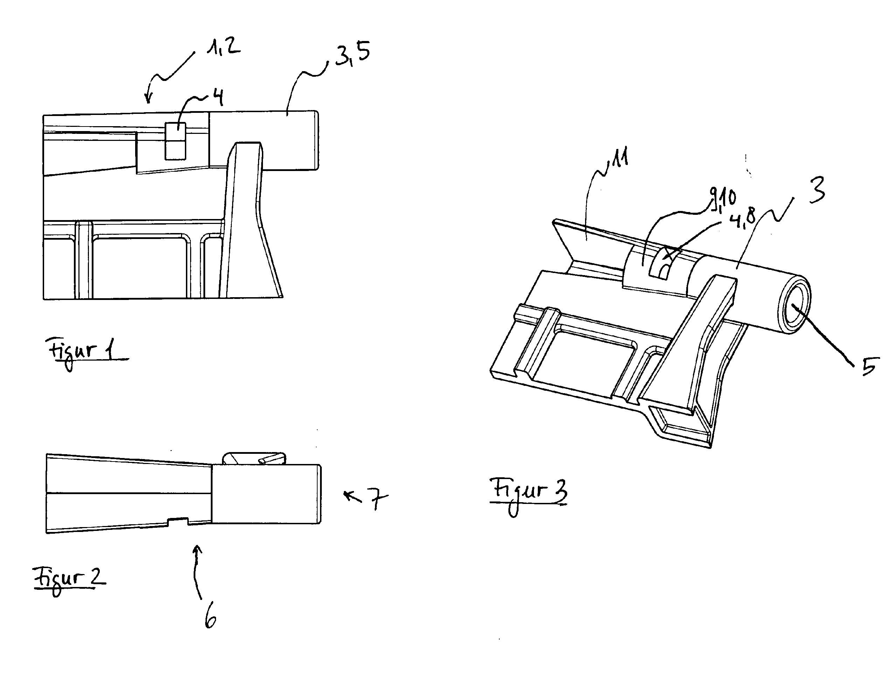

Jede Halterung 3 weist weiterhin eine Öffnung 4 auf, die in der Form gestaltet ist, dass sie eine Mutter aufnehmen kann. Die Öffnung 4 ist, wie in Figur 1 dargestellt, vertikal angeordnet. Die horizontale Bohrung 5 ist als Führung 5 für die Schraube vorgesehen, wobei diese Bohrung 5 in die vertikal angeordnete Öffnung 4 mündet.

Die Größe der Öffnung 4 ist entsprechend der Wahl der Mutter ausgeführt. Die Öffnung 4 ist derart gestaltet, dass die Mutter in einfacher Art und Weise eingesetzt und auch wieder entnommen werden kann. Die Mutter ist, solange sie in der Öffnung 4 liegt, nicht mehr beweglich. Somit kann in einfacher Weise die Schraube, die in die Bohrung 5 eingedreht wird, mit der Mutter gesichert werden. Die Bohrung 5 weist an ihrem Ende 8 eine nicht näher dargestellte zusätzliche Vertiefung 9 auf. Diese nimmt den Schraubenteil auf, der, nachdem die Schraube durch die Mutter gedreht wurde, herausragt.

In Figur 3 ist ein 3-D-Ausschnitt der Klappe 1 dargestellt. Sie zeigt das Ende 2 der Klappe 1 und die Halterung 3 der Klappe 1 für das Anordnen der Klappe 1 am Gestell des Wagens. Ein Steg 10 trennt die Öffnung 4 von dem restlichen Bereich 11. Der Steg kann somit als Bestandteil der Halterung 3 gesehen werden, da die Vertiefung 9 in dem Steg 10, zwischen Öffnung 4 und dem restlichen Bereich 11 der Klappe 1 ausgeführt ist.

Die Öffnung 4 ist an einer der breiten Seiten 6 der Klappe 1 vorgesehen. Dies geht aus Figur 2 hervor. Diese zeigt, dass in dem Bereich, wo die Öffnung 4 ausgeführt ist, eine Ausnehmung vorgesehen ist. Diese entsteht aufgrund der kreisförmigen Form der Halterung 3.

Die Führung 5 ist für die Schraube an beiden schmalen Seiten 7 der Klappe 1 vorgesehen. Die Führung 5 ist kreisförmig gestaltet. Der Durchmesser der Führung 5 ist je nach Art der Schraube ausgeführt. Somit kann die Bohrung 5 für die Führung der Schraube, je nach Art der Schraube, unterschiedlich große Durchmesser aufweisen. Vorzugsweise ist eine Bundschraube im Einsatz.

### Bezugszeichenliste

- 1: Klappe
- 2: Ende (Klappe)
- 3: Halterung
- 4: Öffnung
- 5: Führung, Bohrung
- 6: Breite Seite (Halterung)
- 7: Schmale Seite (Halterung)
- 8: Ende (Bohrung)
- 9: Vertiefung
- 10: Steg
- 11: Restliche Bereich

## Patentansprüche

1. Transportwagen mit Rollen, einem Korb, einer Schiebegriffeinheit und einem Gestell, sowie einer am Korb beweglich rückwärtig angeordneten Klappe (1), wobei die Klappe (1) aus Kunststoff gefertigt ist und wobei die Klappe (1) um eine horizontale Achse verschwenkbar am Gestell angeordnet ist, wofür die Klappe (1) an ihren beiden oberen Enden (2) jeweils eine Halterung (3) aufweist, die in Form einer Bohrung (5) gestaltet ist, **dadurch gekennzeichnet, dass** dass jede Halterung (3) für die Aufnahme einer Mutter eine Öffnung (4) aufweist, und dass die Bohrung (5) als Führung der Schraube vorgesehen ist, die in die Öffnung (4) mündet.

2. Halterung nach Anspruch 1, **dadurch gekennzeichnet, dass** die Größe der Öffnung (4) entsprechend der Wahl der Mutter ausgeführt ist.

3. Halterung nach den Ansprüchen 1 und 2, **dadurch gekennzeichnet, dass** die Öffnung (4) an der breiten Seite (6) der Klappe (1) vorgesehen ist.

4. Halterung nach den Ansprüchen 1 bis 3, **dadurch gekennzeichnet, dass** die Führung (5) für die Schraube an jeder schmalen Seite (7) der Klappe (1) vorgesehen ist und der Durchmesser der Führung (5) je nach Art der Schraube ausgeführt ist.

5. Halterung nach den Ansprüchen 1 bis 4, **dadurch gekennzeichnet, dass** die Führung (5), je nach Art der Schraube unterschiedlich große Durchmesser aufweist.
